Europäisches Patentamt

European Patent Office

Office européen des brevets

(11) Publication number: **0 030 097**
**B1**

(12) **EUROPEAN PATENT SPECIFICATION**

(45) Date of publication of patent specification: **07.09.83**

(51) Int. Cl.³: **B 65 H 45/12, B 31 B 3/00**

(21) Application number: **80304116.9**

(22) Date of filing: **18.11.80**

(54) Sheet folding apparatus.

(30) Priority: **03.12.79 JP 167477/79**

(43) Date of publication of application:
**10.06.81 Bulletin 81/23**

(45) Publication of the grant of the patent:
**07.09.83 Bulletin 83/36**

(84) Designated Contracting States:
**CH DE FR GB IT LI NL SE**

(56) References cited:
**AT - B - 252 703**
**US - A - 2 995 361**
**US - A - 3 122 069**
**US - A - 3 266 391**
**US - A - 4 041 849**

(73) Proprietor: **MITSUBISHI JUKOGYO KABUSHIKI KAISHA**
**5-1, Marunouchi 2-chome Chiyoda-ku**
**Tokyo (JP)**

(72) Inventor: **Imai, Hiroto**
**2575, Kanae-cho**
**Fukuyama-shi (JP)**
Inventor: **Kadowaki, Hideo**
**765-307, Sunami-Nishi-machi**
**Mihara-shi (JP)**

(74) Representative: **Sommerville, John Henry et al,**
**Sommerville & Rushton 89, St. Peters Street**
**St. Albans Herts. AL1 3EN (GB)**

Courier Press, Leamington Spa, England.

The present invention relates to folding apparatus for sheet material, which apparatus can be applied to a flexo-folder gluer, folder gluer, folder gluer for cartons, etc.

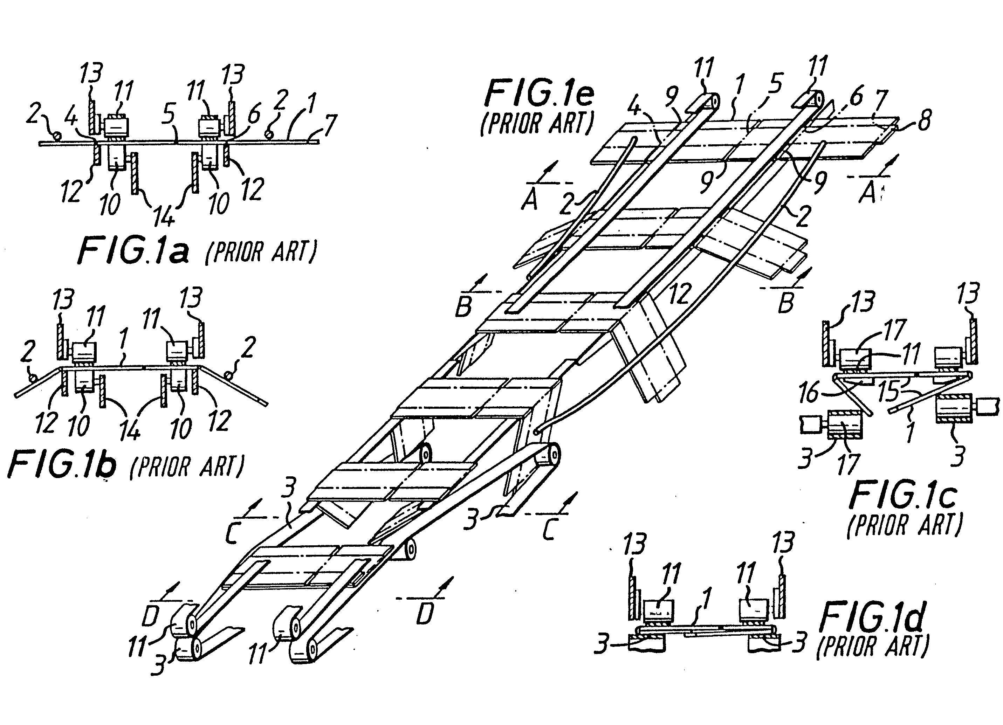

Figures 1a—1e show one known form of folding apparatus for a corrugated cardboard box making machine, the entire apparatus being shown in Figure 1e, and the successive steps of the process in which a corrugated cardboard sheet 1 is successively folded by folding rods 2 and belts 3 while it is being conveyed, being shown in Figures 1a, 1b, 1c and 1d, which are respectively, cross-sectional views taken along lines A—A, B—B, C—C and D—D, of Figure 1e as viewed in the direction of the arrows.

Referring to these Figures, an incoming sheet to the folding apparatus has ruled lines 4, 5, 6 and 7, a flap 8 to be pasted and slotter grooves 9 provided in a preceding operation. The sheet 1 fed from the illustrated upper location in Figure 1e, as shown in Figure 1a, is supported on receiving rolls 10 and is conveyed through the apparatus by conveyor belts 11. In Figure 1e the rollers 10 have been omitted for clarity.

Crease rails 12 are also provided, the surfaces of which are located approximately at the same level as the lower surface of the incoming sheet 1 and the upper edges of the outside surface of the respective crease rails 12 being disposed so as to align with the ruled lines 4 and 6 respectively, of said sheet. The folding rods 2 are disposed outside of the crease rails 12 as shown in Figure 1e, and their configurations are such that, when the sheet 1 is located at the position shown in Figure 1a, they make contact with the upper surface of said sheet and subsequently they successively bend downwardly along the travel path of the sheet. Accordingly, as the sheet 1 advances along its travel path, the left and right side pieces of the sheet are folded downwardly by these folding rods 2 as shown in Figures 1b and 1e.

In the neighbourhood of position C—C in Figure 1e, (see Figure 1c) the folded left and right side pieces of the sheet 1 begin to contact the belts 3. When the sheet 1 arrives at position D—D (see Figure 1d) guided by the belts 3, the folding operation is complete. The respective machine elements described above and illustrated in Figures 1a to 1e are mounted on upper and lower side plates 13 and 14.

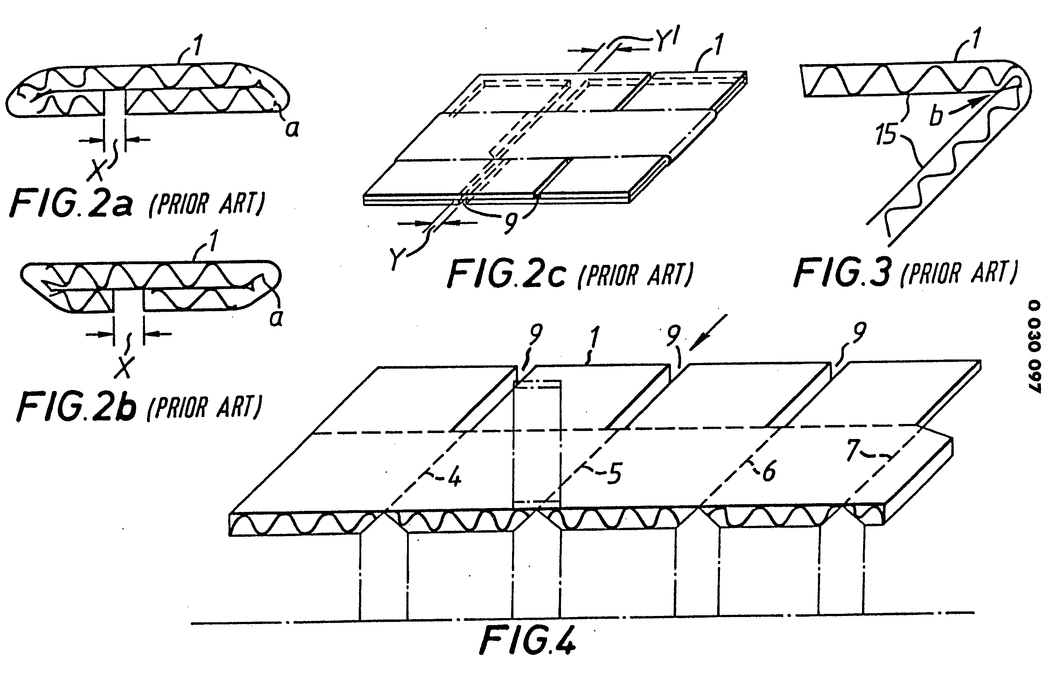

As described above, in the heretobefore known apparatus, the sheet 1 travelling through the folding apparatus has its left and right side pieces folded by being pressed by the folding rods 2 against the crease rails 12, and so, the configuration and dimensions of the cross-section of the sheet after folding can vary randomly as shown in Figures 2a to 2c. More particularly, Figure 2a shows the case where an upper side folded piece of a sheet 1 has been bent, whereas Figure 2b shows the case where a lower side folded piece has been bent; it can be seen that the distance X of the gap between opposite ends of the folded sheet is narrow in the case of Figure 2a, compared with that of Figure 2b. In these Figures, reference character a designates the position of the original ruled line. Figure 2c shows the state where the sheet has been completely folded, in which the distances, Y, Y' of the gaps between the joining ends is not constant. In other words, Figure 2c shows the case where gap distances Y and Y' in Figure 2c are not equal, and the variation in the gap distances can vary randomly, depending upon the actual position of the fold lines to one or other side of their datum position provided by said ruled lines of the sheet.

As will be evident from the above description with reference to Figure 2, as well as from Figure 3, the variations of the configurations and dimensions of the sheet after folding with the heretofore known folding apparatus is caused by the fact that, during folding, the inside face liners 15, 15 of the sheets tend to butt against each other at the position indicated by arrow b in Figure 3, and when folding proceeds further, these liners tend to deform as shown and thus the folded sheet can take the state as shown either in Figure 2a, or in Figure 2b. Thus, unless the configuration of the folding portion is fixed, variation is likely to arise in the gap distances Y, Y' between the joining ends of the complete folded sheet, and hence high precision folding (i.e. $Y=Y'=$constant) cannot be achieved.

In addition, in the known folding apparatus, provision is made such that the sheet 1 is conveyed while it is being inserted between a support rail 16 and the belts 11 and folded as it is being conveyed by a group of folding rolls 17. At this time, both of the inside face liners 15, 15 butting against each other at the tip portion of the support rail 16 are crushed. Accordingly, the configuration of the edge surface is not constant.

Another prior art sheet folding apparatus is known from U.S. Patent Specification No. 4041849 which is of the type in which sheet material is folded while it is being conveyed through said apparatus and comprises a folding station (6-1 to 6-n) at which a pressing disc 12, or crushing roller, may be disposed to press-in or crush the intended inner surface of sheet material in the form of a container blank 1, the action of this pressing disc being opposed by an aligned pressing disc 11, or press roll, which butts against the outer surface of the container blank 1. However, with this apparatus, due to the relatively wide discs 11, 12 the actual crease produced by crushing the inner and outer surfaces of the sheet material produces a relatively wide crushed area which extends both sides of the intended crease line and hence a consistent accuracy of folding cannot be achieved, since it is not certain which side of the intended crease line the sheet material will fold. This is also true of the sheet folding apparatus described in U.S. Patent Specification No. 2,995,361.

It is one object of the present invention to provide sheet folding apparatus which is substantially free from the abovementioned disadvantages in the prior art and which can thereby achieve high precision folding of sheets fed thereto.

According to the present invention, there is provided sheet folding apparatus of the type generally described above with reference to US Patent Specification No. 4041849, characterised in that one or more sets of crushing rolls are provided and disposed to crush said intended inner face of the sheet material along only one predetermined side of an intended crease line of said sheet material, and in that press rolls are disposed on either side of said intended crease line.

The above-mentioned and other features and objects of the present invention will become apparent from the following description of a preferred embodiment of the invention taken in conjunction with the accompanying drawings, in which:—

Figure 1 shows one example of previously known sheet folding apparatus, Figures 1a to 1d being cross-sectional views taken along lines A—A, B—B, C—C and D—D respectively, in Figure 1e as viewed in the direction of the arrows Figure 1e being a perspective view of the entire apparatus.

Figures 2a to 2c are schematic views showing different folded states of a sheet after folding with said known apparatus,

Figure 3 is a schematic view showing the state where the inside face liners of a sheet on respective sides of the folding line butt against each other upon folding of a sheet in said known apparatus,

Figure 4 is a perspective view showing the state of a sheet before folding,

Figure 5 is an enlarged cross-sectional view showing said preferred embodiment of the present invention, which is taken along line E—E in Figure 7,

Figures 6a to 6c are schematic views showing various states of a sheet when folded with apparatus according to the present invention, and

Figure 7 is a perspective view of the entire preferred sheet folding apparatus.

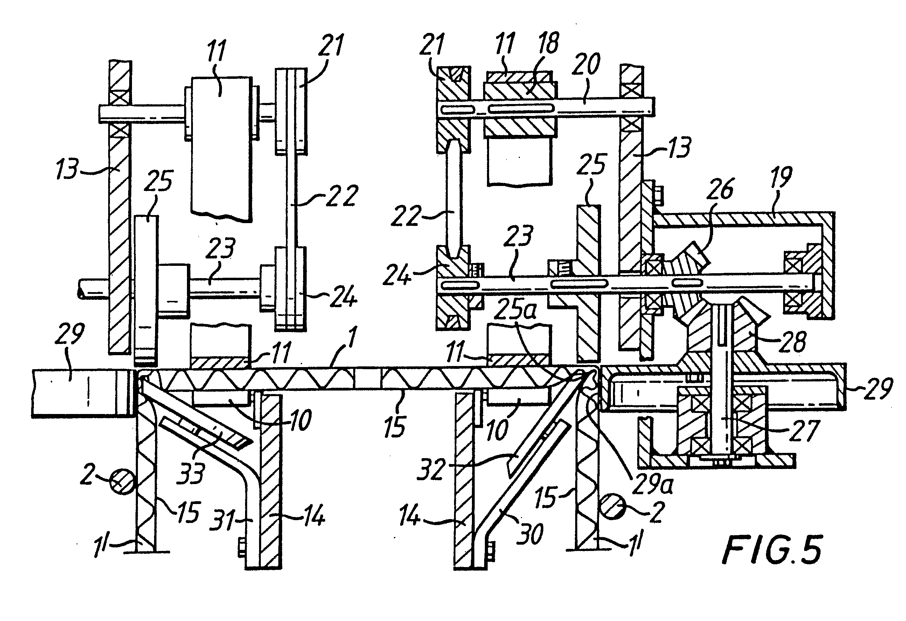

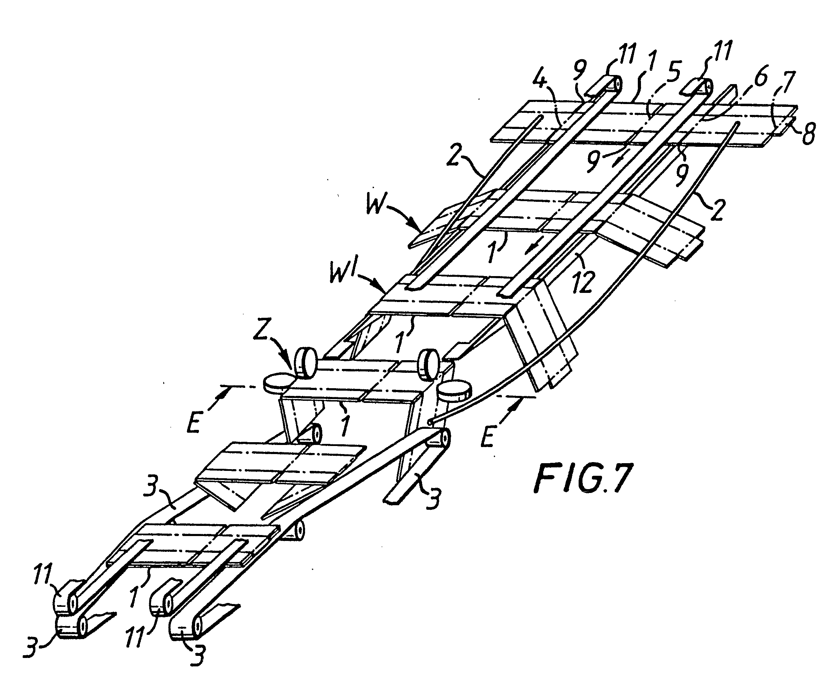

The preferred embodiment of sheet folding apparatus is shown in its entirety in Figure 7, and Figure 5 shows a cross-section thereof, taken along the line E—E in Figure 7. It is to be noted that component parts equivalent to those included in the previously known apparatus described with reference to Figure 1 are given like reference numerals.

Referring now to Figure 7, in the preferred embodiment, the sheet 1 fed to the apparatus from the upper portion of the figure, is advanced in the obliquely downward direction as shown by arrows, and it is successively folded by the folding rods 2 and the belts 3. The incoming sheet has ruled lines 4, 5, 6 and 7, a flap 8 to be pasted and slotter grooves 9 provided by a preceding operation as in the case of the known apparatus. Although not shown completely in Figure 7, conveyor belts 11 and receiving rolls 10 are provided similar to those of the known apparatus shown in Figure 1, and can convey the sheet while clamping it between said conveyor belts 11 and crease rails 12. The crease rails 12 as in the known apparatus, have their upper surfaces located substantially at the same level as the lower surface of the incoming sheet, and the upper edges of the outside surfaces of the respective crease rails are disposed so as to align with the ruled lines 4 and 6 respectively, of said sheet. Also, the folding rods 2 are disposed outside of the crease rails 12, and are each of such a curved configuration that, as the sheet 1 advances from the position where said folding rods first make contact with the upper surfaces of the left and right portions of said sheet, the left and right portions of the sheet 1 are folded downwardly.

Referring now particularly to Figure 5, the sheet 1 is shown being conveyed by the conveyor belts 11 and supported by the receiving rolls 10 located under the conveyor belts 11. Reference numeral 18 designates a pulley fixedly secured on a shaft 20 which is rotatably supported from an upper side plate 13 in a cantilever fashion, and the conveyor belt 11 is extended therearound. At the free end of the shaft 20 a V-pulley 21 is fixedly secured which is connected to another V-pulley 24 in turn fixedly mounted on a shaft 23 by the intermediary of a V-belt 22. The shaft 23 is rotatably and horizontally supported from the upper side plate 13 and a frame 19 fixedly secured to the side plate. On part of the shaft 23 inside the upper side plate 13 an upper press roll 25 is fixedly mounted, while on an outside part of said shaft a bevel gear 26 is fixedly mounted. The bevel gear 26 meshes with another bevel gear 28 which is fixedly mounted on a vertical shaft 27 intersecting at a right angle with the shaft 23, and to the bevel gear 28 a side press roll 29 is fixedly secured whose peripheral surface 29a is coaxial with the shaft 27. The respective peripheral surfaces 25a, and 29a of the above-mentioned upper press roll 25 and side press roll 29, respectively, are disposed close to each other so as to jointly define perpendicular surfaces. The above-described bevel gear mechanism is illustrated only in the right side portion of Figure 5. However, it will be appreciated that the same mechanism is also provided in the left side portion.

On lower side plates 14, 14 are fixed angled support members 30, 31 on which respective crushing rolls 32, 33 are rotatably mounted, said rolls having appropriately angled peripheral surfaces. Also, the above-mentioned receiving rolls 10 are rotatably supported on the outside of the lower side plates 14 for supporting the sheet, and the lower surfaces of the conveyor belts 11 are in alignment with respective lines of rolls 10 and make tight contact with the upper surface of the sheet. It is to be noted that the crushing rolls 32 and 33 could be mounted either in the same direction, or in the opposite direction as shown in Figure 5, the mounting direction determining the setting angle of the crushing rolls 32, 33 whereby the inside face liner 15 of the sheet 1 on one side or the other of the crease line is crushed, as required.

In the operation of this preferred embodiment of folding apparatus, a sheet 1 with its having ruled lines, slotter grooves, etc. is fed to the apparatus and conveyed in the direction of the arrows, and by the action of the folding rods 2, the sheet 1 is successively folded (as shown in Figure 7), and reaches the folding station E—E which is shown in cross-section in Figure 5. At the folding station, the V-pulley 21 is rotated via the shaft 20 by rotation of the pulley 18 which makes internal rolling contact with the conveyor belt 11. The rotation is also transmitted to the V-pulley 24 via the V-belt 22. When the V-pulley 24 rotates, the upper press roll 25 and the bevel gear 26 are simultaneously rotated by the rotation of the shaft 23, and hence, the side press roller 29 as well as the vertical shaft 27 rotate together with the bevel gear 28 which meshes with the bevel gear 25.

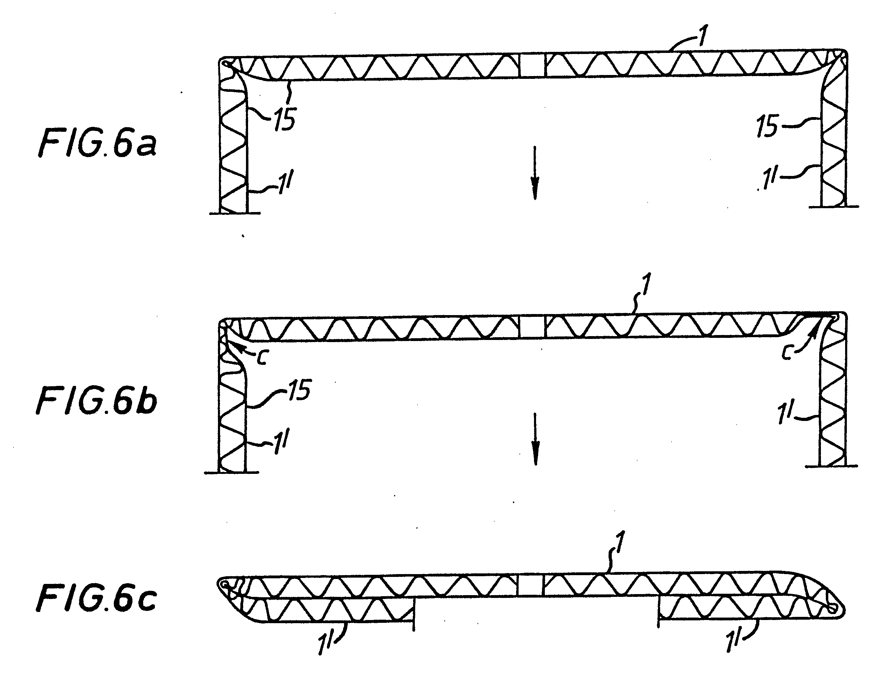

The sheet 1 therefore has its left and right side portions gradually folded along the ruled crease lines 4 and 6 at the positions W and W' in Figure 7, and at the position Z in Figure 7 (that is, at the position just prior to entering said folding station), it is folded nearly into a rectangular shape, and both the left and right side folded portions 1', 1' take the shape shown in Figure 6a. When the shaped sheet passes through the folding station, the inner upper surface of the right corner portion of the sheet 1 and the inner side surface of the left corner portion are pinched together between the crushing roll 32 and the upper press roll 25 on the right side, and between the crushing roll 33 and the side press roll 29 on the left side, respectively, due to the illustrated directions of mounting of said crushing rolls. Consequently, the inside face liners 15, 15 of the sheet on a predetermined side in the respective corner portions, that is, the inside face liner 15 on the upper side of the right corner portion and the inside face liner 15 on the lateral side of the left corner portion are crushed as shown at c in Figure 6b. Thus, the sheet is forcibly shaped by the crushing rolls and press rolls into the cross-section configuration as shown in Figure 6b.

The sheet is further conveyed along its travel path beyond the folding station in the thus shaped condition, to be pinched between the conveyor belts 11 and associated conveyor belts 3 (as shown in Figure 7), so that it can be completely folded as shown in Figure 6c.

As described in detail above, with reference to a preferred embodiment according to the present invention, since during the folding process one or more sets of crushing rolls are disposed to crush the inner face liner on predetermined sides of the crease lines of left and right folding sections of sheet material fed to the apparatus, and since upper press rolls and side press rolls are provided so as to oppose the action of said crushing rolls and to butt against the outside upper and side surfaces of the sheet on either side of said crease lines, an accurately positioned crease can be obtained, due to the fact that butting of the inside face lines against each other on either side of the crease line is avoided. Hence the gap distances between the joining ends of the completely folded sheet is made substantially constant, and thereby folding can be achieved with high precision.

From the foregoing it will be appreciated that the main distinction between the preferred apparatus according to the present invention and the known apparatus shown in Figure 1 are as follows:—

In Figure 1 to achieve folding a large number of creasing and folding rolls 16, 17 are necessary. However, in the preferred embodiment, since crushing rolls 32, 33 are disposed on the inner (lower) side of the left and right folding sections of the sheet and press rolls 25, 29 are positioned to oppose the crushing rolls, the number of the press rolls need only be small, and with respect to the mounting positions of the press rolls they need only be disposed in the neighbourhood of the folding position where the sheet is folded by 90°.

In the preferred embodiment only the inside face liner on one side of the crease line is crushed to avoid butting of the inside face liners on either side of the crease line against each other as in the case of the known apparatus, so that a predetermined folded end surface configuration may always be obtained.

## Claims

1. Sheet folding apparatus of the type in which sheet material is folded while it is being conveyed through said apparatus, and comprising a folding station (E—E, Figure 7) at which crushing rolls (32, 33) are disposed so as to crush the intended inner face (15) of the sheet material (1) and at which press rolls (25, 29) are disposed so as to oppose the action of said crushing rolls and to butt against the outer face of the sheet material folded at the folding station, characterised in that one or more sets of crushing rolls (32, 33) are provided and disposed to crush said inner face (15) along only one predetermined side of an intended crease line (4 and 6) of the sheet material, and in that said press rolls (25, 29) are disposed on either side of said intended crease line.

2. Sheet folding apparatus according to Claim 1, characterised in that each crushing roll (32, 33) has an angled peripheral face and is set by support means (30, 31) at an appropriate angle to crush into the intended inner face of the sheet material on the predetermined side of an intended crease line (4 and 6).

3. Sheet folding apparatus according to Claim 1 or Claim 2, characterised in that each crushing roll (32, 33) is associated with two press rolls (25 and 29), one for each side of an intended crease line (4 and 6), in that the drive for the press rolls is taken via a drive arrangement (18, 20 to 24) from conveying means (11) for the sheet material (1), and in that the two press rolls for each crushing roll are driven in unison via meshing gearing (26 to 28).

**Patentansprüche**

1. Bogenfalzeinrichtung von jener Bauart, bei welcher bogenförmiges Material gefalzt wird, während es durch die Einrichtung hindurchgefördert wird, mit einer Falzstation (E—E, Fig. 7), bei welcher Stauchrollen (32, 33) derart angeordnet sind, daß sie die vorgesehene innere Fläche (15) des bogenförmigen Materiales (1) stauchen und bei welcher Druckrollen (25, 29) derart angeordnet sind, daß sie der Einwirkung der Stachrollen entgegenwirken und gegen die Außenfläche des bogenförmigen Materiales anliegen, das an der Falzstation gefalzt wird, dadurch gekennzeichnet, daß einer oder mehrere Satz von Stauchrollen (32, 33) vorgesehen und angeordnet ist, um die genannte innere Fläche (15) lediglich entlang einer vorbestimmten Seite einer vorgesehenen Rillinie (4 und 6) des bogenförmigen Materials zu stauchen, und daß die genannten Druckrollen (25, 29) beidseitz der genannten vorgesehenen Rillinie angeordnet sind.

2. Bogenfalzeinrichtung nach Anspruch 1, dadurch gekennzeichnet, daß jede Stauchrolle (32, 33) eine winklig angeordnete Stirnfläche hat und durch Trageinrichtungen (30, 31) in einem geeigneten Winkel eingestellt ist, um die vorgesehene Innenfläche des bogenförmigen Materiales an der vorgesehenen Seite einer vorgesehenen Rillinie (4 und 6) zu stauchen.

3. Bogenfalzeinrichtung nach Anspruch 1 oder 2, dadurch gekennzeichnet, daß jeder Stauchrolle (32, 33) zwei Preßrollen (25 und 29) zugeordnet sind, und zwar eine für jede Seite einer vorgesehenen Rillinie (4 und 6), daß der Antrieb für die Druckrollen von einer Antriebseinrichtung (18, 20 bis 24) von einer Fördereinrichtung (11) für das bogenförmige Material (1) abgenommen wird, und daß die beiden Druckrollen für jede Stauchrolle über kämmende Zahnräder (26 bis 28) gleichförmig angetrieben sind.

**Revendications**

1. Machine de pliage d'un matériau en forme de feuille dans laquelle la feuille est pliée pendant son transport à travers la machine, comportant une station de pliage (E—E, figure 7) pourvue de rouleaux d'ècrasement (32, 33) agencés pour écraser la future face intérieur (15) de la feuille (1) et de rouleaux presseurs (25, 29), montés de manière à s'opposer à l'action desdits rouleaux d'écrasement et pour s'appuyer contre la surface extérieure de la feuille pliée dans la station de pliage, caractérisée en ce qu'elle comporte un ou plusieurs jeux de rouleaux d'écrasement (32, 33) destinés à n'écraser la face intérieure (15) que le long d'un côté prédéterminé d'une ligne de pliage (4 et 6) de la feuille, et en ce quel lesdits rouleaux presseurs (25, 29) sont disposés de part et d'autre de ladite ligne de pliage.

2. Machine de pliage selon la revendication 1, caractérisée en ce que chaque rouleau d'écrasement (32, 33) comporte une surface périphérique angulaire et est ajusté par des moyens supports (30, 31) dans une position angulaire appropriée pour écraser ladite face intérieur de la feuille le long du côté prédéterminé de ladite ligne de pliage.

3. Machine de pliage selon l'une quelconque des revendications 1 ou 2, caractérisée en ce que chaque rouleau d'ecrasement (32, 33) est associé à deux rouleaux presseurs (25 et 29) correspondant respectivement aux deux côtés de la ligne de pliage (4 et 6) en ce que l'entraînement des rouleaux presseurs s'effectue à l'aide d'un dispositif d'entraînement (18, 20 à 24) connecté aux moyens de transport (11) de la feuille (1), et en ce que les deux rouleaux presseurs de chaque rouleau d'écrasement sont entraînés en synchronisme au moyen d'un engrenage (26 à 28).

FIG.1a (PRIOR ART)

FIG.1b (PRIOR ART)

FIG.1e (PRIOR ART)

FIG.1c (PRIOR ART)

FIG.1d (PRIOR ART)

0 030 097

FIG.2a (PRIOR ART)

FIG.2b (PRIOR ART)

FIG.2c (PRIOR ART)

FIG.3 (PRIOR ART)

FIG.4

0 030 097

FIG.5

FIG.6a

1

15

15

1'

1'

FIG.6b

1

c

15

c

1'

1'

FIG.6c

1

1'

1'

0 030 097

FIG.7

0 030 097